(19) **Europäisches Patentamt**

**European Patent Office**

**Office européen des brevets**

(11) **EP 0 935 121 B1**

(12) **EUROPEAN PATENT SPECIFICATION**

(45) Date of publication and mention
of the grant of the patent:
**02.10.2002  Bulletin 2002/40**

(51) Int Cl.$^7$: **G01C 19/72**

(21) Application number: **99102242.7**

(22) Date of filing: **04.02.1999**

(54) **Method for improving the performance of fiber-optic gyros**

Verfahren zur Verbesserung der Leistung eines optischen Faserkreisels

Procédé pour améliorer les performances d'un gyroscope à fibre optique

(84) Designated Contracting States:
**DE FR GB IT**

(30) Priority: **06.02.1998  US 19848**

(43) Date of publication of application:
**11.08.1999  Bulletin 1999/32**

(73) Proprietor: **LITTON SYSTEMS, INC.**
**Woodland Hills, California 91367-6675 (US)**

(72) Inventors:
• **Tazartes, Daniel A.**
**West Hills, California 91304 (US)**

• **Mark, John G.**
**Pasadena, California 91106 (US)**
• **Welker, James G.**
**Woodland Hills, CA 91367 (US)**

(74) Representative: **Wagner, Karl H., Dipl.-Ing. et al**
**WAGNER & GEYER**
**Patentanwälte**
**Gewürzmühlstrasse 5**
**80538 München (DE)**

(56) References cited:
**EP-A- 0 463 594         US-A- 5 181 078**
**US-A- 5 530 545         US-A- 5 682 241**

**Description**

**BACKGROUND OF INVENTION**

This invention relates generally to fiber-optic gyros and more specifically to the signal processing associated with fiber-optic gyros.

Fiber-optic gyros measure rate of rotation by determining the phase difference in light waves that propagate in opposite directions through a coil wound with optical fiber. Light waves that propagate through the coil in the direction of rotation take a longer time than light waves that propagate through the coil in the direction opposite to the direction of rotation. This difference in time, measured as the phase difference between counter-propagating light waves, is proportional to the angular velocity of the coil.

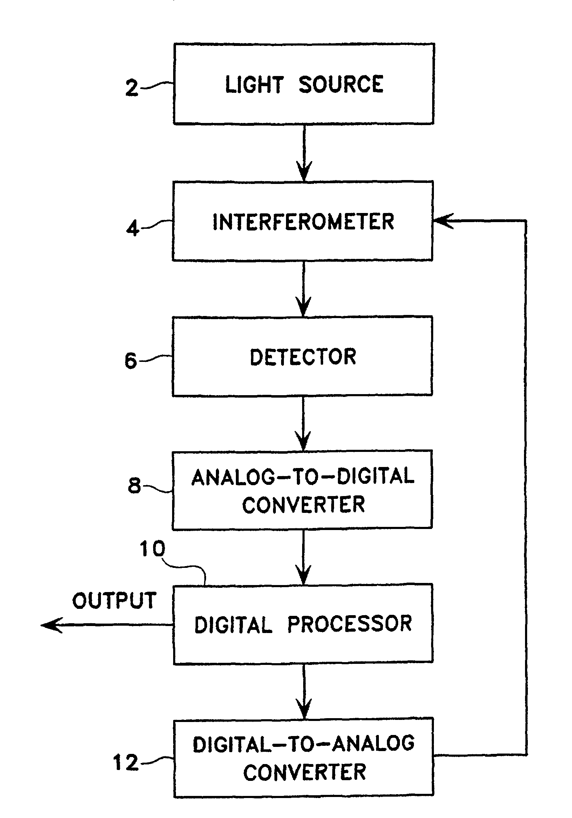

A typical block diagram for a fiber-optic gyro is shown in Fig. 1. A light source 2 supplies a reasonably coherent light beam to the optical-fiber interferometer 4 which causes the input light beam to be split into two light beams that are fed into opposite ends of an optical fiber configured as a coil. The light beams emerging from opposite ends of the optical fiber are recombined into a single output light beam which feeds into the detector 6.

The output of the detector 6 is given by

$$I = \frac{I_o}{2}[1 + \cos\theta(t)] \tag{1}$$

where $I_o$ is the peak light intensity and $\theta(t)$ is the phase difference between the two beams expressed as a function of time.

The phase difference $\theta(t)$ typically takes the form

$$\theta(t) = [\Phi(t)]_{\text{mod } 2\pi} - [\Phi(t - \tau)]_{\text{mod } 2\pi} + \phi_S + 2\pi n \tag{2}$$

where $\Phi(t)$ is the phase-modulation generating function and $\Phi(t)_{\text{mod } 2\pi}$ is the phase modulation introduced by a phase modulator at one end of the fiber-optic coil in the interferometer 4, $\tau$ is the propagation time through the fiber optic coil, and $(\phi_s + 2\pi n)$ is the so-called Sagnac phase resulting from the rotation of the fiber-optic coil about its axis. The integer $n$ (called the Sagnac fringe number) is either positive or negative and the Sagnac residual phase $\phi_s$ is constrained to the range $-\pi \leq \phi_s < \pi$.

The output of the detector 6 is converted to digital form by the analog-to-digital converter 8 and then processed in the digital processor 10 to yield at the output a measure of the rate and angle of rotation of the interferometer 4. In addition, the digital processor 10 generates a phase-modulation generating function $\Phi(t)$, the modulo-$2\pi$ portion of which is converted to analog form by the digital-to-analog converter 12 and supplied to the phase modulator in the interferometer 4.

The phase-modulation generating function $\Phi(t)$ typically consists of a number of phase-modulation components among which are $\Phi_{SE}(t)$ and $\Phi_M(t)$. The phase-modulation component $\Phi_{SE}(t)$ is typically a stepped waveform with steps that change in height by $-\phi_{SE}$ at $\tau$ intervals where $\phi_{SE}$ is an estimate of $\phi_s$. Thus, the $\Phi_{SE}(t)$ modulation cancels in large part $\phi_s$. The accurate measurement of the uncancelled portion of the Sagnac residual phase $\phi_s$ is of great importance in that it is the quantity that is used in refining the estimate of the Sagnac phase and generating the $\Phi_{SE}(t)$ phase-modulation component.

The accurate measurement of the uncancelled portion of the Sagnac residual phase is greatly facilitated by choosing the $\Phi_M(t)$ phase-modulation component such that $[\Phi_M(t)-\Phi_M(t-\tau)]$ is equal to $j\phi_M$ where the permitted values of $j$ are the values -1 and 1 and $\phi_M$ is a predetermined positive phase angle somewhere in the vicinity $\pi/2$ radians where the slope of the cosine function is greatest. This effect can be achieved, for example, by having $\Phi_M(t)$ be a square wave with amplitude $\pi/2$ and period $2\tau$.

While it might appear that the best choice for $\phi_M$ would be $\pi/2$ where the slope of the cosine function is greatest, it has been shown that values between $\pi/2$ and $\pi$ provide better noise performance.

The $\Phi_M(t)$ modulation can also be a stepped function wherein the phase increases or decreases at $\tau$ intervals by $\phi_M$. Under these circumstances,

$$[\Phi(t)]_{\text{mod } 2\pi} - [\Phi(t - \tau)]_{\text{mod } 2\pi} = 2\pi k - \phi_{SE} + j\phi_M \tag{3}$$

Substituting these expressions in equation (2), we obtain

$$\theta = 2\pi(k + n) + j\phi_M \qquad (4)$$

We ignore the term $\phi_S$-$\phi_{SE}$ for the purposes of the present discussion.

Fiber optic gyros generally employ broadband light sources in order to avoid polarization cross-coupling effects as the light propagates through the fiber. As a result, however, coherence is lost as non-reciprocal phase shifts between the clockwise and counter-clockwise beams are introduced. This leads to the "fringe visibility effect" whereby the interference pattern between the two beams loses contrast as the difference in optical paths increases.

Attention is also drawn to the document US 5,682,241 which discloses a fiber optic gyroscope with a phase modulator that applies sequences of artificial phase shifts in the region of over-modulation between light beams counter-propagating within a sensor coil of a SAGNAC interferometer to obtain improved random walk performance.

Last but not least attention is drawn to the document EP-A-0 463 594 which discloses a fiber optic gyro with clock-wise and counter-clock-wise propagating light rays in an optical fiber coil, wherein the light rays are given a bias phase modulation signal by a phase modulator connected at an end of said optical fiber coil, in such a manner that a phase shift increasing stepwise by $\pi/2$ radian every time interval T is applied in steps, and then a phase shift decreasing stepwise by $\pi/2$ radian every time an interval T is applied in steps to the phase modulator.

In accordance with the present invention a method for determining a bias in a fiber-optic gyro comprising counter-propagating light beams from a broadband source, as set forth in claim 1, is provided. Preferred embodiments of the present invention are disclosed in the dependent claims.

## SUMMARY OF THE INVENTION

The invention is a method for improving the performance of a fiber-optic gyro comprising counter-propagating light beams from a broadband source in an optical fiber configured as a coil. The fiber-optic gyro is of the type where the phases of the light beams are step-modulated at one or both ends of the optical fiber at time intervals equal to the light propagation time $\tau$ through the optical fiber, the step being in the range from 0 to $2\pi$-$\delta$ radians where $\delta$ is an infinitesimal. The step is the sum of an estimate of the Sagnac phase residual $\phi_{SE}$ with reversed sign and the quantity $(2\pi k + j\phi_M)$ where the index $k$ can take on the values -1, 0, and 1, and the index $j$ can take on the values -1 and 1. The phase angle $\phi_M$ is a positive constant less than $\pi$ radians.

The method comprises the steps of determining the interferometer output light intensity, determining the Sagnac fringe number $n$, calculating the error $P_{nkj}$ in the interferometer output light intensity attributable to the use of a broadband light-beam source for particular values of an index pair $(k,j)$, determining estimates $A_{kj}$ of the probabilities of the index pairs $(k,j)$ by counting the occurrences of each index pair $(k,j)$ over a period of time, and determining the bias $\varepsilon$ in the output of a fiber-optic gyro using the equation

$$\varepsilon = S\sum_{k,j} jA_{kj}P_{nkj} \, ,$$

where $S$ is the scale factor that translates interferometer output light intensity error into rotation rate of the fiber-optic gyro. The presence of the $j$ within the summation represents the demodulation of the interferometer output which extracts the rate information.

## BRIEF DESCRIPTION OF THE DRAWINGS

FIG. 1 is a block diagram of a fiber-optic gyro and associated control loop.

## DESCRIPTION OF THE PREFERRED EMBODIMENT

It can be shown that given a broadband source, equation (1) becomes (ignoring powers of $\theta$-squared greater than one)

$$I = \frac{I_o}{2}[1 - (1 - \alpha\theta^2)\cos\theta] \qquad \text{5)}$$

While this equation is an approximation, it holds relatively well for typical fiber-optic gyro sources whose line-widths are on the order of 1% of the wavelength.

With $\phi_M$ equal to an odd-integer multiple of $\pi/2$ radians, the fringe visibility error vanishes because $\cos\theta$ equals zero. For other values of $\phi_M$ in a closed-loop fiber-optic gyro operating within the confines of a single fringe ($-\pi \leq \phi_s < \pi$) the effect manifests itself as a bias error that is rate-dependent and normally appears as a simple scale-factor miscalibration. However, for multiple fringe operation ($n > 1$), the effect manifests itself as a bias error which is a function of phase shift within a fringe. Multiple-fringe operation is especially important in gyros with large Sagnac scale factors, the Sagnac scale factor being the ratio of the Sagnac phase to the rotation rate of the fiber-optic gyro.

The error in the intensity $I$ from the interferometer resulting from fringe visibility can be calculated in the following way. Using equations (4) and (5), we can obtain the following expression for a closed-loop fiber-optic gyro operating with a modulation amplitude $\phi_M$.

$$-(\frac{I_0}{2}\alpha\,\cos\theta)\theta^2 = \beta(n+k)(n+k+j\frac{\phi_M}{\pi}) \qquad (6)$$

where we have dropped terms which contribute only to intensity level shift (i.e. which do not depend on $j$, $k$, or $n$) and

$$\beta = -2\pi^2\alpha I_0\cos\phi_M \qquad (7)$$

Substituting equation (6) in equation (5), we obtain

$$I = \frac{I_0}{2}(1 + \cos\theta) + P_{nkj} + \text{DC intensity bias} \qquad (8)$$

where

$$P_{nkj} = \beta(n + k)(n + k + j\frac{\phi_M}{\pi}) \qquad (9)$$

The DC intensity bias is ignored in equation (8) since it does not contribute to gyro bias.

The quantity $P_{nkj}$ is the error in the measured intensity $I$ from the interferometer. The resulting bias $\varepsilon$ in the output from the fiber-optic gyro is then given by

$$\varepsilon = S\sum_{k,j} jA_{kj}P_{nkj} \qquad (10)$$

where $S$ is the scale factor that translates interferometer intensity variations into rotation rate of the fiber-optic coil and $A_{kj}$ is an estimate of the probability of the index pair ($k,j$). The quantity $S$ is inversely proportional to the Sagnac scale factor of the gyro.

In order to constrain $[\Phi_M(t)]_{\text{mod 2x}}$ to the range from 0 to a value less than $2\pi$, $k$ must satisfy the following relationship:

$$k = h - c \qquad (11)$$

where

$$h = SGN(-\phi_{SE} + j\phi_M): \qquad h = 0 \text{ denotes } +; \ h = 1 \text{ denotes } -. \tag{12}$$

$$c = 0 ; \ \{[\Phi(t-\tau)]_{\mathrm{mod}\,2\pi} + 2\pi h - \phi_{SE} + j\phi_M\} < 2\pi$$
$$c = 1 ; \qquad\qquad \text{otherwise} \tag{13}$$

The sum of $A_{kj}$ over the indices $k$ and $j$ must be equal to one. It also follows from the above that:

$$A_{1,1} = A_{-1,-1} = 0 \ ; \quad -\phi_M \le \phi_{SE} \le \phi_M$$
$$A_{1,1} = A_{1,-1} = 0 \ ; \quad -\pi \le \phi_{SE} < -\phi_M \tag{14}$$
$$A_{-1,1} = A_{-1,-1} = 0 \ ; \quad \phi_M < \phi_{SE} < \pi$$

It is desirable that the phase modulation be such that the following statistical relationships apply:

$$\sum_k A_{kj} = \frac{1}{2} \tag{15}$$

$$A_{-1,1} + A_{1,-1} = \frac{\phi_M}{2\pi} \quad ; \quad -\phi_M \le \phi_{SE} \le \phi_M$$

$$A_{-1,1} - A_{-1,-1} = \frac{\phi_M}{2\pi} \quad ; \quad -\pi \le \phi_{SE} < -\phi_M \tag{16}$$

$$A_{1,-1} - A_{1,1} = \frac{\phi_M}{2\pi} \quad ; \quad \phi_M < \phi_{SE} < \pi$$

It follows that

$$\varepsilon = S\beta[(A_{0,1} - A_{0,-1})(1 - \frac{\phi_M}{\pi}) + 2\frac{\phi_M}{\pi}(A_{-1,-1} - A_{1,1})] \tag{17}$$

or alternatively

$$\varepsilon = S\beta[(A_{0,1} - A_{0,-1})(1 + \frac{\phi_M}{\pi}) - 2\frac{\phi_M}{\pi}(A_{1,-1} - A_{-1,1})] \tag{18}$$

It should be noted that using a phase-modulating function having the prescribed statistical properties results in a bias $\varepsilon$ in the output from the fiber-optic gyro that is independent of the Sagnac fringe number $n$.

Estimates of the A's can be obtained by counting the occurrences of the index pairs $(k,j)$ during operation.

According to its broadest aspect the invention relates to a method for determining bias in a fiber-optic gyro comprising counter-propagating light beams from a broadband source in an optical fiber, the phases of the light beams being step-modulated at one or both ends of the optical fiber at time intervals approximately equal to the light propagation time $\tau$ through the optical fiber, the step being in the range from 0 to $2\pi\text{-}\delta$ radians, $\delta$ being an infinitesimal, the step being the sum of an estimate of the Sagnac phase residual $\phi_{SE}$ with reversed sign and the quantity $(2\pi k + j\phi_M)$, the permitted values of the index $k$ being the values -1, 0, and 1, the permitted values of the index $j$ being the values -1 and 1, the phase angle $\phi_M$ being a positive constant less than $\pi$ radians, the method comprising the step: determining the interferometer output light intensity.

**Claims**

1. A method for determining bias in a fiber-optic gyro comprising counter-propagating light beams from a broadband source (2) in an optical fiber, the phases of the light beams being step-modulated at one or both ends of the optical fiber at time intervals approximately equal to the light propagation time $\tau$ through the optical fiber, the step being in the range from 0 to $2\pi$-$\delta$ radians, $\delta$ being an infinitesimal, the step being the sum of an estimate of the Sagnac phase residual $\phi_{SE}$ with reversed sign and the quantity $(2\pi k + j\phi_M)$, the permitted values of the index $k$ being the values -1, 0, and 1, the permitted values of the index $j$ being the values -1 and 1, the phase angle $\phi_M$ being a positive constant less than $\pi$ radians, the method comprising the steps:

   determining an interferometer (4) output light intensity;
   calculating the bias $\varepsilon$ in the interferometer (4) output light intensity attributable to the use of the broadband light-beam source (2).

2. The method of claim 1 wherein a phase-modulation generating function $\{\Phi(t)\}_{mod2\pi}$ is defined by the equation

$$\{\Phi(t)\}_{mod\,2\pi} = \{\Phi(t\text{-}\tau)\}_{mod\,2\pi} + 2\pi k - \phi_{SE} + j\phi_M,$$

   the method further comprising the step:

   determining the value of index $k$ from the values of $h$ and $c$, $h$ being equal to zero if the sign of $(-\phi_{SE} + j\phi_M)$ is positive, $h$ otherwise being equal to one, $c$ being equal to zero if $\{\Phi(t\text{-}\tau)\}_{mod\,2\pi} + 2\pi h - \phi_{SE} + j\phi_M$ is less than $2\pi$, $c$ otherwise being equal to 1.

3. The method of claim 1 further comprising the step:

   determining the bias $\varepsilon$ in the output of the fiber-optic gyro attributable to the use of the broadband light-beam source (2) utilizing the light intensity errors $P_{nkj}$, $n$ being the Sagnac fringe number.

4. The method of claim 3 wherein the bias $\varepsilon$ is independent of the Sagnac fringe number.

5. The method of claim 1 further comprising the step:

   determining estimates $A_{kj}$ of the probabilities of the index pairs $(k,j)$ by counting the occurrences of each index pair $(k,j)$ over a period of time.

6. The method of claim 5 further comprising the step:

   determining the bias $\varepsilon$ in the output of the fiber-optic gyro attributable to the use of a broadband light-beam source (2) using the equation

$$\varepsilon = S\sum_{k,j} jA_{kj}P_{nkj}$$

   or an equivalent thereof, $P_{nkj}$ being the light intensity errors, $n$ being the Sagnac fringe number, $S$ being the scale factor that translates interferometer intensity variations into rotation rate of the fiber-optic gyro.

7. The method of claim 6 wherein the bias $\varepsilon$ is independent of the Sagnac fringe number.

8. The method of claim 5 further comprising the step:

   determining the bias $\varepsilon$ in the output of the fiber-optic gyro attributable to the use of a broadband light-beam source (2) using the equation

$$\varepsilon = S\beta\left(2\frac{\phi_M}{\pi}A_{-1,-1} + (-A_{0,-1} + A_{0,1})\left(1 - \frac{\phi_M}{\pi}\right) - 2\frac{\phi_M}{\pi}A_{1,1}\right)$$

or an equivalent thereof, *S* being the scale factor that translates interferometer intensity variations into rotation rate of the fiber-optic gyro and β is a constant for a particular fiber-optic gyro configuration.

9.  The method of claim 1 wherein the light intensity error $P_{nkj}$ is approximately proportional to $\theta^2\cos\theta$, θ being the difference in phase of the light beams emerging from each end of the optical fiber, *n* being the Sagnac fringe number.

10. The method of claim 1 wherein the light intensity error $P_{nkj}$ is approximately proportional to $(n + k)(n + k + j\frac{\phi_M}{\pi})$.

## Patentansprüche

1.  Ein Verfahren zur Bestimmung der Vorspannung in einem faseroptischen Kreisel, der sich entgegengesetzt fortpflanzende Lichtstrahlen von einer Breitbandquelle (2) in einer optische Faser aufweist, wobei die Phasen der Lichtstrahlen schrittmoduliert sind, an einem oder beiden Enden der optischen Faser, und zwar zu Zeitintervallen annähernd gleich der Lichtfortpflanzungszeit τ durch die optische Faser, wobei der Schritt im Bereich von 0 bis 2 π - δ Radian liegt, wobei δ ein infinitesimaler Wert ist, wobei der Schritt die Summe einer Schätzung des Sagnac Phasenrests $\varphi_{SE}$ ist mit umgekehrten Vorzeichen und der Größe $(2\pi k + j\phi_M)$, die gestatteten Werte des Index k die Werte -1, 0 und 1 sind, die gestatteten Werte des Index j die Werte -1 und 1 sind, der Phasenwinkel $\phi_M$ eine positive Konstante kleiner als π Radian ist und das Verfahren die folgenden Schritte aufweist:

    Bestimmen einer Interferometer (4) Ausgangslichtintensität;

    Berechnen der Vorspannung ε in der Interferometer (4) Ausgangslichtintensität die zurückzuführen ist auf die Verwendung der Breitbandlichtstrahlquelle (2).

2.  Verfahren nach Anspruch 1, wobei eine Phasenmodulations-Erzeugungsfunktion $\{\phi(t)\}_{mod2\pi}$ definiert wird durch die Gleichung

    $$\{\Phi(t)\}_{mod\,2\pi} = \{\Phi(t\text{-}\tau)_{mod\,2\pi} + 2\pi k - \phi_{SE} + j\phi_M,$$

    wobei das Verfahren weiterhin den folgenden Schritt aufweist:

    Bestimmen des Wertes des Index k aus den Werten von h und c, wobei h gleich Null ist, wenn das Zeichen von $\{-\phi_{SE} + j\phi_M)$ positiv ist, wobei h ansonsten gleich Eins ist, wobei c gleich Null ist, wenn $\{\phi(t\text{-}\tau)\}_{mod2\pi} + 2\pi h - \phi_{SE} + j\phi_M$ kleiner als 2π ist, wobei c ansonsten gleich 1 ist.

3.  Verfahren gemäß Anspruch 1, wobei ferner der folgende Schritt vorgesehen ist:

    Bestimmung der Vorspannung ε in der Ausgangsgröße des faseroptischen Kreisels, zurückzuführen auf die Verwendung der Breitbandlichtstrahlenquelle (2) unter Verwendung von Lichtintensitätsfehlern $P_{akj}$, wobei n die Sagnac Rand- oder Fringezahl ist.

4.  Verfahren nach Anspruch 3, wobei die Vorspannung ε unabhängig von der Sagnac Fringe- oder Randzahl ist.

5.  Verfahren nach Anspruch 1, wobei ferner der folgende Schritt vorgesehen ist:

    Bestimmung von Schätzungen $A_{kj}$ der Wahrscheinlichkeiten von Indexpaaren (kj) durch Zählen der Auftritte jedes Indexpaars (kj) über eine Zeitperiode hinweg.

6. Verfahren nach Anspruch 5, wobei ferner der folgende Schritt vorgesehen ist:

   Bestimmung der Vorspannung ε in der Ausgangsgröße des faseroptischen Kreisels, zurückzuführen auf die Verwendung einer Breitband-Lichtstrahlquelle (2) unter Verwendung der Gleichung:

$$\varepsilon = S \sum_{k,J} jA_{kj} P_{nkj}$$

   oder einem Äquivalent davon, wobei $P_{akj}$ die Lichtintensitätsfehler sind, n die Sagnac Randzahl ist, S der Maßstabs- oder Scale-Faktor ist, der die Interferometerintensitätsvariation in die Rotationsrate oder Rotationsgeschwindigkeit des faseroptischen Kreisels überträgt.

7. Verfahren nach Anspruch 6, wobei die Vorspannung unabhängig von der Sagnac Randzahl ist.

8. Verfahren nach Anspruch 5, wobei der folgende Schritt vorgesehen ist:

   Bestimmung der Vorspannung ε in der Ausgangsgröße des faseroptischen Kreisels zurückzuführen auf die Verwendung einer Breitbandlichtstrahlquelle (2) unter Verwendung der Gleichung

$$\varepsilon = S\beta \left( 2\frac{\phi_M}{\pi} A_{i,-1} + (-A_{0,-1} + A_{0,1})\left(1 - \frac{\phi_M}{\pi}\right) - 2\frac{\phi_M}{\pi} A_{1,1} \right)$$

   oder einem Äquivalent davon, wobei S der Skalen- oder Maßstabsfaktor ist, der die Interferometerintensitätsvariationen in die Drehrate bzw. Drehgeschwindigkeit des faseroptischen Kreisels überträgt, und wobei β eine Konstante ist für eine spezielle faseroptische Kreiselkonfiguration.

9. Verfahren nach Anspruch 1, wobei der Lichtintensitätsfehler $P_{akj}$ annähernd proportional zu $\theta^2\cos\theta$ ist, wobei θ die Differenz in der Phase der Lichtstrahlen ist, die aus jedem Ende der optischen Faser austreten, wobei n die Sagnac Randzahl ist.

10. Verfahren nach Anspruch 1, wobei der Lichtintensitätsfehler $P_{akj}$ annähernd proportional zu $(n+k)(n+k+j\frac{\phi_M}{\pi})$ ist.

**Revendications**

1. Procédé pour déterminer le décalage dans un gyroscope à fibre optique comprenant des faisceaux lumineux se propageant en sens inverse à partir d'une source à large bande (2) dans une fibre optique, les phases des faisceaux lumineux étant modulées par pas à une ou les deux extrémités de la fibre optique à des intervalles de temps sensiblement égaux à la durée τ de propagation de la lumière dans la fibre optique, le pas étant dans la plage de 0 à 2π-δ radians, δ étant infinitésimal, le pas étant la somme d'une estimation du résidu de phase de Sagnac $\Phi_{SE}$ de signe inversé et de la quantité $(2\pi k+j\Phi_M)$, les valeurs permises de l'indice k étant les valeurs -1, 0 et 1, les valeurs permises de l'indice j étant les valeurs -1 et 1, l'angle de phase $\Phi_M$ étant une constante positive inférieure à π radians, le procédé comprenant les étapes suivantes :

   déterminer l'intensité lumineuse de sortie de l'interféromètre (4) ;
   calculer le décalage ε de l'intensité lumineuse de sortie de l'interféromètre (4) attribuable à l'utilisation de la source lumineuse large bande (2).

2. Procédé selon la revendication 1, dans lequel une fonction de génération de modulation de phase $\{\Phi(t)\}mod2\pi$ est définie par l'équation

$$[\Phi(t)]_{\text{mod } 2\pi} = [\Phi(t - \tau)]_{\text{mod } 2\pi} + 2\pi k - \Phi_{SE} + j\Phi_M$$

le procédé comprenant en outre l'étape consistant à déterminer la valeur de l'indice k à partir des valeurs de h et c, h étant égal à zéro si le signe de ($-\Phi_{SE} + j\Phi_M$) est positif, h étant sinon égal à un, c étant égal à zéro si $\{\Phi(t - \tau)_{\text{mod } 2\pi} + 2\pi h - \Phi_{SE} + j\Phi_M$ est inférieur à $2\pi$, c étant sinon égal à 1.

3. Procédé selon la revendication 1, comprenant en outre l'étape consistant à déterminer le décalage $\varepsilon$ de sortie du gyroscope à fibre optique attribuable à l'utilisation de la source lumineuse large bande (2) en utilisant les erreurs d'intensité lumineuse $P_{nkj}$, n étant le numéro de frange de Sagnac.

4. Procédé selon la revendication 3, dans lequel le décalage $\varepsilon$ est indépendant du numéro de frange Sagnac.

5. Procédé selon la revendication 1, comprenant l'étape consistant à déterminer des estimations $A_{kj}$ des probabilités des paires d'indices (k,j) en comptant les survenances de chaque paire d'indices (k,j) sur une certaine durée.

6. Procédé selon la revendication 5, comprenant en outre l'étape consistant à déterminer le décalage $\varepsilon$ de la sortie du gyroscope à fibre optique attribuable à l'utilisation d'une source lumineuse large bande (2) en utilisant l'équation :

$$\varepsilon = S\sum_{kj} jA_{kj}P_{nkj}$$

ou un équivalent de celle-ci, $P_{nkj}$ étant les erreurs d'intensité lumineuse, n étant le numéro de frange de Sagnac, S étant le facteur d'échelle qui transforme les variations d'intensité d'interféromètre en vitesse de rotation du gyroscope à fibre optique.

7. Procédé selon la revendication 6, dans lequel le décalage $\varepsilon$ est indépendant du numéro de frange de Sagnac.

8. Procédé selon la revendication 5, comprenant en outre l'étape consistant à déterminer le décalage $\varepsilon$ dans la sortie du gyroscope à fibre optique attribuable à l'utilisation d'une source lumineuse large bande (2) en utilisant l'équation :

$$\varepsilon = S\beta\left( 2\frac{\Phi_M}{\pi} A_{-1,-1} + (-A_{0,-1} + A_{0,1})\left( 1 - \frac{\Phi_M}{\pi} \right) - 2\frac{\Phi_M}{\pi} A_{1,1} \right)$$

ou un équivalent de celle-ci, S étant un facteur d'échelle qui transforme les variations d'intensité de l'interféromètre en vitesse de rotation du gyroscope à fibre optique et $\beta$ est une constante pour une configuration particulière de gyroscope à fibre optique.

9. Procédé selon la revendication 1, dans lequel l'erreur d'intensité lumineuse $P_{nkj}$ est sensiblement proportionnelle à $\theta^2\cos\theta$, $\theta$ étant la différence de phase des faisceaux lumineux sortant de chaque extrémité de la fibre optique, n étant le numéro de frange de Sagnac.

10. Procédé selon la revendication 1, dans lequel l'erreur d'intensité lumineuse $P_{nkj}$ est sensiblement proportionnelle à :

$$(n + k)(n + k + j\frac{\Phi M}{\pi})$$

```
2 ─┐  ┌──────────────────────┐
    └─│     LIGHT  SOURCE     │
      └──────────────────────┘
                 │
                 ▼
4 ─┐  ┌──────────────────────┐
    └─│    INTERFEROMETER     │◄────┐
      └──────────────────────┘     │
                 │                  │
                 ▼                  │
6 ─┐  ┌──────────────────────┐     │
    └─│       DETECTOR        │     │
      └──────────────────────┘     │
                 │                  │
                 ▼                  │
8 ─┐  ┌──────────────────────┐     │
    └─│   ANALOG─TO─DIGITAL   │     │
      │      CONVERTER        │     │
      └──────────────────────┘     │
10                                  │
    ┌──────────────────────┐       │
OUTPUT ◄──│  DIGITAL  PROCESSOR  │ │
      └──────────────────────┘     │
                 │                  │
                 ▼                  │
12 ─┐ ┌──────────────────────┐     │
    └─│   DIGITAL─TO─ANALOG   │─────┘
      │      CONVERTER        │
      └──────────────────────┘
```